# EUROPEAN PATENT SPECIFICATION

(11) **EP 3 278 592 B1**
(45) Date of publication and mention of the grant of the patent: **16.10.2019**
(21) Application number: 15716454.2
(22) Date of filing: 30.03.2015
(51) Int. Cl.: H04W 24/04, H04W 16/18, H04W 28/08, H04L 12/24, H04W 28/02, H04W 84/00, H04W 88/08

(54) **TECHNIQUE FOR EXTENDING CAPACITIES OF A RADIO ACCESS NETWORK**
TECHNIK ZUR ERWEITERUNG DER KAPAZITÄTEN EINES FUNKZUGANGSNETZWERKS
TECHNIQUE D'EXTENSION DE CAPACITÉS D'UN RÉSEAU D'ACCÈS RADIO

(43) Date of publication of application: 07.02.2018
(73) Proprietor: Telefonaktiebolaget LM Ericsson (publ), 164 83 Stockholm (SE)
(72) Inventor: LARSSON, Tony, S-194 78 Upplands Väsby (SE); MORITZ, Simon, SE-191 34 SOLLENTUNA (SE); MULAS VIELA, Ignacio Manuel, S-112 60 Stockholm (SE); SEYVET, Nicolas, S-164 45 Kista (SE)
(74) Representative: Zacco Sweden AB
(86) International application number: PCT/EP2015/056872
(87) International publication number: WO 2016/155766

(56) References cited:
- US-A1- 2014 233 412
- US-A1- 2014 247 792
- US-B1- 8 897 770
- MAHMOUD SARA ET AL: "Collaborative UAVs Cloud", 2014 INTERNATIONAL CONFERENCE ON UNMANNED AIRCRAFT SYSTEMS (ICUAS), IEEE, 27 May 2014 (2014-05-27), pages 365-373, XP032610438, DOI: 10.1109/ICUAS.2014.6842275 [retrieved on 2014-06-23]

## Description

### Technical Field

The present disclosure generally relates to mobile communications. In particular, a technique for extending capacities of a radio access network is presented. The technique may be practiced in the form of methods, computer programs, arrangements (e.g., apparatuses) and systems.

### Background

Radio access networks (RANs) are important components of mobile communications systems. Conceptually, RANs are located between wireless user terminals on the one side and operator core networks on the other. RANs communicate with the wireless user terminals over the air interface and connect them to services provided in the core networks.

It is well known that RANs face uneven traffic loads. During peak hours, for example, many user terminals are wirelessly attached to the RANs and consume their resources (e.g., in terms of data transmission capacities). At night time, on the other hand, the data transmission volume drastically decreases.

To fulfil Service Level Agreements (SLA) between network operators and their subscribers, RANs are configured to reliably cope with strongly fluctuating usage conditions. Conventionally, the problem of fluctuating usage conditions is solved by over-dimensioning the RAN hardware to cover peak hour traffic. This means in turn that during off-peak hours, a lot of spare capacity remains available. The over-dimensioning thus leads to an overall poor usage of available resources. Additionally, during the network rollout, future increase of usage must be accounted for, which leads to even further over-dimensioning.

Evidently, over-dimensioning hardware is an expensive solution as the difference between peak and normal hours is often around 200 to 300% or even more (e.g., in the vicinity of sports arenas). Having over-dimensioned resources increases the total operational cost (OPEX) as well as initial capital investment (CAPEX) for network operators.

US 2014/233412 A1 discloses methods directed toward integrating an ad hoc cellular network into a fixed cellular network. The methods automate the creation and integration of these networks. Further, methods for establishing a stand-alone, ad hoc cellular network are disclosed. In either of these implementations, an ad hoc cellular network is integrated or established using mobile ad hoc cellular base stations configured to transmit and receive over a variety of frequencies, protocols, and duplexing schemes. The methods flexibly and dynamically choose an access or backhaul configuration and radio characteristics to optimize network performance. Additional implementations provide for enhancing an existing network's coverage as needed, establishing a local network in the event of a loss of backhaul coverage to the core network, and providing local wireless access service within the ad hoc cellular network.

US 8 897 770 B1 discloses an apparatus for providing distributed airborne wireless communications. A distributed communication payload includes a payload control electronics module, an air-to-user link module to provide wireless communication links between airborne platforms and end-user devices, and an air-to-air link module to provide wireless communication links between airborne platforms, wherein the air-to-user and air-to-air link modules are subdivided into multiple sections that can be disposed on different airborne platforms.

Mahmoud Sara et al.: "Collaborative UAVs Cloud", 2014 International Conference on Unmanned Aircraft Systems (ICUAS), IEEE, pages 365-373, discloses a concept referred to as "Collaborative UAVs (Unmanned Aerial Vehicles) Cloud", to simplify the efforts and reduce the time and cost needed to develop collaborative UAVs applications.

### Summary

Accordingly, there is a need for a technique that permits to more efficiently cope with the fluctuating usage conditions of RANs.

The above object is achieved by the subject-matter of the independent claims.

According to a first aspect, a method of extending capacities of an RAN is presented. The method comprises flying a drone to a site of the RAN, wherein the drone is carrying cloud computing resources. The method further comprises registering the cloud computing resources of the drone of at cloud management entity associated with the RAN, and providing the registered cloud computing resources of the drone to the RAN.

The capacities of the RAN may be extended in various ways. As an example, the RAN capacities may dynamically be extended such that the RAN is capable of temporarily handling a larger set of user terminals. The cloud computing resources carried by the drone can be hardware resources. These hardware resources may be used to extend one or more of computing, storage and networking capacities of the RAN.

In one variant, the drone provides the cloud computing resources responsive to a capacity expansion request. For example, the drone may fly to the site of the RAN responsive to the capacity expansion request. The capacity expansion request may be initiated in the RAN. In one scenario the capacity expansion request is initiated in the RAN upon detecting an existing or upcoming requirement for extending its capacities. The capacity expansion request may be transmitted from the RAN directly to the drone or, in the alternative, to a central drone controller arrangement. The drone controller arrangement may be a stationary arrangement.

In a further variant, the drone provides the cloud computing resources responsive to an analysis of a usage pattern of the RAN. The analysis may be made centrally for a plurality of RANs (e.g., by a central controller arrangement).

The method may further comprise flying a flock of drones to the site of the RAN. The flock of drones may comprise multiple drones, wherein a size of the flock is dependent on cloud computing resources required by the RAN. In a first implementation, the flock of drones comprises a flock master configured to steer to the site of the radio access network and one or more flock slaves configured to autonomously follow the flock master. In another implementation, the flock of drones may comprise multiple drones each configured to autonomously steer to the site of the RAN.

The method may further comprise establishing a communication connection between the drone and the RAN. The communication connection may be configured for the provision of the cloud computing resources to the RAN. The communication connection may further be configured for registering the cloud computing resources of the drone at the cloud management entity. In other variants, the registration of the cloud computing resources and the provision of the registered cloud computing resources are performed via separate communication connections between the drone and the RAN. Of course, the step of registering the cloud computing resources of the drone could also be performed via a communication connection between the drone and the clould management entity, that bypasses the RAN.

As for the provision of the cloud computing resources, the communication connection may be established at least on an infrastructure layer. In such a scenario the cloud computing resources provided to the RAN may comprise at least one Infrastructure-as-a-Service (IaaS). Of course, the communication connection could at the same time be established on one or more layers above or below the infrastructure layer.

In a further variant, the communication connection is established at least on an application layer. In this variant the cloud computing resources provided to the RAN comprise at least one Software-as-a-Service (SaaS). Of course, the communication connection may at the same time be established on one or more layers above or below the application layer. The SaaS may comprise a Radio Base Station, RBS, service or function.

The communication connection in terms of at least one of registration and provision of the cloud computing resources may either be established as a wireless link or a wirebound link.

According to a further aspect, a method of extending capacities of an RAN is provided, wherein the method comprises triggering registration of cloud computing resources carried by a drone at a cloud management entity associated with the RAN, and receiving the registered cloud computing resources of the drone.

The method may be performed by an RAN arrangement (e.g., one or more nodes of the RAN). Registration of the cloud computing resources may be triggered at the cloud management entity responsive to any triggering event at the RAN arrangement. The triggering event may, for example, include one or more of detection of the drone at the site of the RAN, establishment of a communication connection between the drone and the RAN, receipt of a registration request from the drone, and so on.

The method according to the second aspect may further comprise initiating a capacity extension request for the RAN (e.g., responsive to a preceding determination that the RAN requires a capacity extension). The cloud computing resources may be received responsive to the capacity extension request.

The method according to the second aspect may also comprise sending information pertaining to a usage pattern of the RAN to a drone controller arrangement. In such a case, the cloud computing resources may be received responsive to an analysis of the usage pattern at the drone controller arrangement. This analysis may be performed centrally by the drone controller arrangement for multiple RANs.

According to a third aspect, a method of controlling a plurality of drones that are each configured to extend capacities of RANs is provided. The method comprises receiving information pertaining to usage patterns of multiple RANs, analysing the usage pattern of each individual RAN, and controlling the drones to fly to the sites of the RANs to extend the capacities of the RANs in accordance with the analysis.

In the third method aspect, the drones may be controlled based on a trained model that is determined in the usage pattern analysis step. The trained model may be determined using a machine learning scheme.

The usage pattern information in accordance with all method aspects presented herein may be indicative of a performance of a cell associated with the RAN. As such, the usage pattern information may include one or more cell performance indicators.

In the third method aspect, a drone flight plan may be created based on the usage pattern analysis. The drones may be controlled to dynamically extend the capacities of the RANs in accordance with that flight plan. A dedicated number of drones per RAN may be assigned based on the usage pattern analysis. The dedicated number of drones per RAN may include a flock master and one or more flock slaves, as generally explained herein.

Also provided is a computer program product comprising program code portions for performing the steps of any of the methods presented herein when the computer program product is executed by at least one computing device (e.g., a processor or a distributed set of processors). The computer program product may be stored on a computer-readable recording medium, such as a semiconductor memory, a CD-ROM, DVD, and so on.

Also provided is a drone configured to extend capacities of an RAN. The drone comprises a payload comprising cloud computing resources, a controller configured to register the cloud computing resources of the drone at a cloud management entity associated with the radio access network, and an interface configured to provide the registered cloud computing resources of the drone to the RAN.

Still further, an RAN arrangement is provided. The RAN arrangement comprises a controller configured to trigger registration of cloud computing resources carried by a drone at a cloud management entity associated with the RAN. Further, the RAN arrangement comprises an interface configured to receive the registered cloud computing resources of the drone.

The arrangement may be an RBS node or may comprise an RBS service or function. Further, the arrangement may comprise a drone docking station configured to recharge the drone and/or to establish a wirebound communication connection between the drone and the arrangement. The communication connection may be used for at least one of the provision of the registered could computing resources to the RAN and control signalling (e.g., for registering the cloud computing resources at the cloud management entity).

Also provided is a controller arrangement for a plurality of drones that are each configured to extend capacities of RANs. The controller arrangement is configured to receive information pertaining to usage patterns of multiple RANs. The controller arrangement is further configured to analyse the usage pattern of each RAN, and to control the drones to extend the computing capacities of the RANs in accordance with the analysis.

Still further, a telecommunications cloud system is presented comprising one or more of the drone, the radio access network arrangement and the controller arrangement presented herein. The telecommunications cloud system may further comprise at least one of a cloud management entity, a data center and an Evolved Packet Core (EPC), or EPC service or function.

### Brief Description of the Drawings

Further details, aspects and advantages of the present disclosure will become apparent from the following description of exemplary embodiments and the accompanying drawings, wherein:
- Fig. 1: schematically illustrates an embodiment of a telecommunications cloud system in which the present disclosure may be implemented;
- Fig. 2: schematically illustrates an embodiment of a drone;
- Fig. 3: schematically illustrates an embodiment of an RAN arrangement;
- Fig. 4: schematically illustrates an embodiment of a drone controller arrangement;
- Fig. 5: illustrates flow diagrams of method embodiments performed by a drone and an RAN arrangement, respectively;
- Fig. 6: schematically illustrates an embodiment of a virtualized application cluster controlled by a cloud management entity;
- Fig. 7: schematically illustrates a flock of drones comprising a flock master and multiple flock slaves;
- Fig. 8: illustrates flow diagrams of method embodiments performed by an RAN arrangement and a drone controller arrangement, respectively;
- Fig. 9: illustrates an embodiment for gathering usage pattern information;
- Fig. 10: illustrates an embodiment for determining a trained model for drone control;
- Fig. 11: illustrates the input and output parameters of a trained model; and
- Fig. 12: schematically illustrates an embodiment of a usage pattern.

### Detailed Description

In the following description, for purposes of explanation and not limitation, specific details are set forth, such as specific network nodes, network configurations, communication protocols, and so on, in order to provide a thorough understanding of the present disclosure. It will be apparent to one skilled in the art that the present disclosure may be practiced in other embodiments that depart from these specific details. For example, while the following embodiments will partially be described in connection with exemplary cloud architectures and the exemplary Network Functions Virtualization (NFV) ETSI standard, it will be appreciated that the present disclosure may also be practiced in connection with other cloud architectures and other cloud management and orchestration standards.

Those skilled in the art will further appreciate that the steps, services and functions explained herein below may be implemented using individual hardware circuitry, using software functioning in conjunction with a programmed micro-processor or general purpose computer, using one or more Application Specific Integrated Circuits (ASICs) and/or using one or more Digital Signal Processors (DSPs). It will also be appreciated that when the present disclosure is described in terms of a method, it may also be embodied in one or more processors and one or more memories coupled to the one or more processors, wherein the one or more memories are encoded with one or more programs that perform the steps, services and functions disclosed herein when executed by the one or more processors.

The following embodiments describe various details of a technique that enables dynamic allocation of cloud computing resources, in particular additional cloud computing resources, to an RAN. The RAN may belong to a virtualized telecommunications network system.

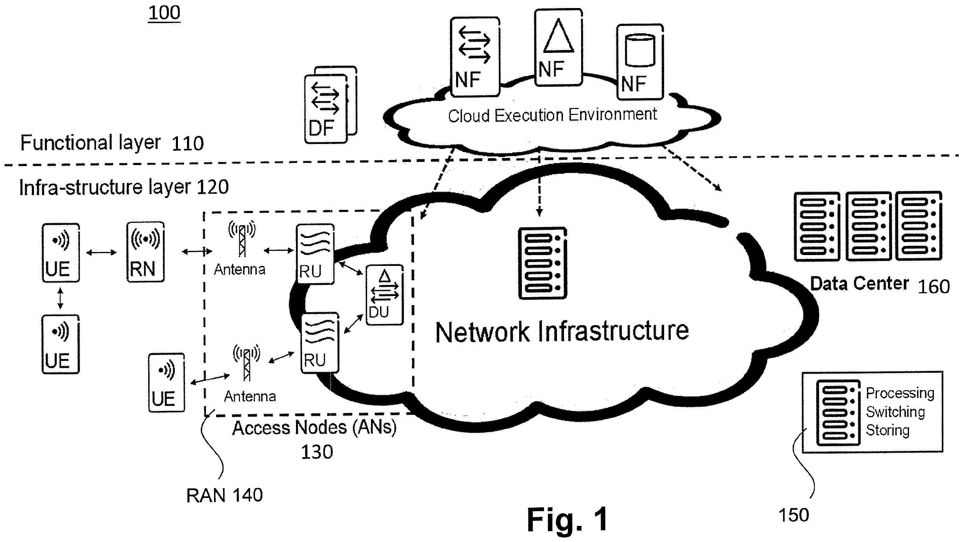

Fig. 1 illustrates an embodiment of a possible cloud architecture 100 of a 5^{th} Generation (5G) telecommunications network system in which the present disclosure may be practiced. The cloud architecture 100 logically separates network functions potentially running on virtualized hardware (functional layer 110 in Fig. 1) from the infra-structure or hardware layer 120 containing the physical nodes in the 5G network system.

The functional layer 110 contains the functions (Network Functions (NF) and Dedicated Functions (DF)) performed by the 5G network system including tasks like mobility, security, routing, baseband processing, etc. Many but not necessarily all of these NFs will be performed by software running on virtualized hardware. Some of these NFs running on virtualized hardware will utilize Application Program Interfaces (API) provided by an execution environment to be able to control functionalities executed in hardware such as Service Defined Network (SDN) switches, hardware acceleration and so on.

Since at least some of these NFs are virtualized (VNFs), they are not tied to a specific hardware node. That is, they can be executed in different places within the network system depending on the given deployment scenario and requirements. This approach makes it possible to, for instance, distribute in a flexible way gateway functionalities closer to radio access nodes 130 when needed for particular services, while supporting more centralized gateways for other services. In theory this also makes it possible to dynamically re-configure the network system based on ongoing services or load. However, in the 2020 time frame it is still expected that time critical functions such as baseband processing today performed by dedicated hardware in the access nodes 130 (implementing DFs) will in most cases continue to do so.

The infrastructure (hardware) layer 120 of the cloud architecture 100 contains radio nodes including user terminals (also called User Equipment, UEs), relay nodes (including wireless MTC-gateways or self-backhauled nodes) and one or more RANs 140 with the access nodes 130. In Fig. 1, the access nodes 130 are separated in antenna, Radio Unit (RU) and Digital Unit (DU). Further, the infrastructure layer 120 comprises network nodes including processing, switches/routers and storage nodes 150 and one or more data centers 160. The nodes 150 may, for example, be configured to host EPC services or functions.

The cloud model underlying cloud architectures, such as the architecture 100 shown in Fig. 1, can be divided into four layers: the hardware layer (1), the infrastructure layer (2), the platform layer (3) and the application layer (4). Each higher layer builds on top of the features and services provided by the lower layers.

The hardware layer typically refers to the data center(s) 160 and other core infrastructure nodes 150 (see Fig. 1). The infrastructure is offered as infrastructure-as-a-service (IaaS) at layer 2. Then, at the layer 3, the platform layer, high-level platforms and environments are provided to develop software or services often referred to as platform-as-a-service (PaaS). These platforms usually take the form of operating systems and/or software frameworks. The point is to shield from dealing with the underlying complexities of the infrastructure entities such as Virtual Machine (VM) containers and raw storage blocks. Finally, at the application layer, there are installed generally one or more service provider applications providing, in the present embodiment, telecommunications services and, in more general realizations, business applications, web services, multimedia and gaming services. All of these qualify as software-as-a-service (SaaS) in the cloud paradigm terminology.

Due to the high availability requirements in the cloud architecture 100 of Fig. 1, it is critical to develop techniques for service assurance to fulfill those requirements, but also many other requirements. This aim involves continuous monitoring of relevant Key Performance Indicators (KPIs) relating to a specific SLA for a given service (e.g., an RBS service within the RAN 140), analyzing the data for finding abnormal trends and anomalies and triggering the suitable cloud orchestration actions in case of any violations.

One of the properties of the cloud architecture 100 is the non-homogeneity of the different computing environments. While, for example, the data 160 center in Fig. 1 can be considered as having unlimited cloud computing resources (both physical and virtual), the situation is different at the RAN 140, where both hardware and virtual resources are limited due to, for example, size constraints. In addition, critical NFVs or RBS services will need to constantly run at the cloud edge (i.e., the RAN 140) with high SLAs, reducing further available resources for additional services. In short, the closer to the edge of the telecommunications network of Fig. 1 an application or service is deployed, the more expensive it will be to allocate cloud computing resources for it.

As stated above, during peak hours, extra capacities are required by critical services in the RAN 140. This requirement strips cloud computing resources from other applications running on the edge. To avoid such a stripping of resources, the present disclosure suggests dynamically providing cloud computing resources to the RAN 140 via one or more drones.

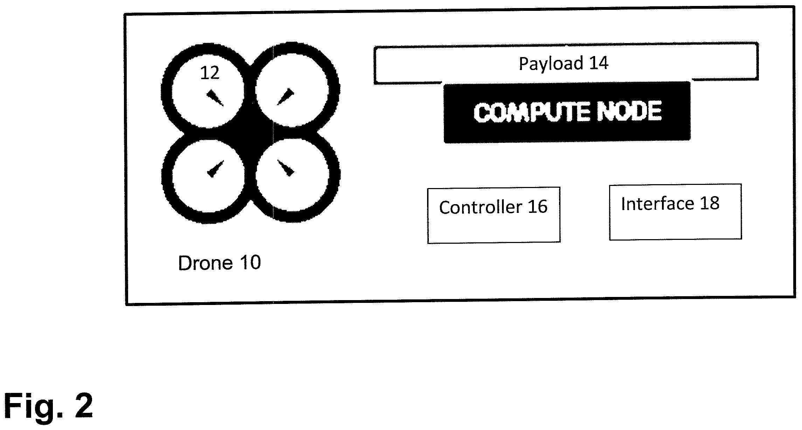

Fig. 2 illustrates an embodiment of a drone 10 according to the present disclosure. As shown in Fig. 2, the drone 10 comprises flight equipment 12 (e.g., motors, rotors, gyroscopes, batteries, and so on). Additionally, the drone 10 comprises payload 14 in the form of cloud computing resources. In Fig. 2, the payload 14 takes the form of a computing node, but it will be understood that the payload can generally take the form of computing, storage and networking hardware. The flight equipment 12 is configured to be able to transport the payload 14 to RAN sites.

As further shown in Fig. 2, the drone 10 also comprises a controller 16. The controller 16 is configured to register the cloud computing resources (e.g., the payload 14) at a cloud management entity associated with the RAN 140. Still further, the drone 10 comprises an interface 18 configured to provide the registered cloud computing resources to the RAN 140. The interface 18 may take the form of a hardware interface (e.g., a plug or socket) and/or a software interface. Additionally, or in the alternative, the interface 18 may be realized for wireless communication with the RAN 140. In certain variants, the interface 18 may also be used for control signaling with the RAN 140 or the cloud management entity (not shown in Fig. 1). In another configuration, a separate interface may be provided for that purpose.

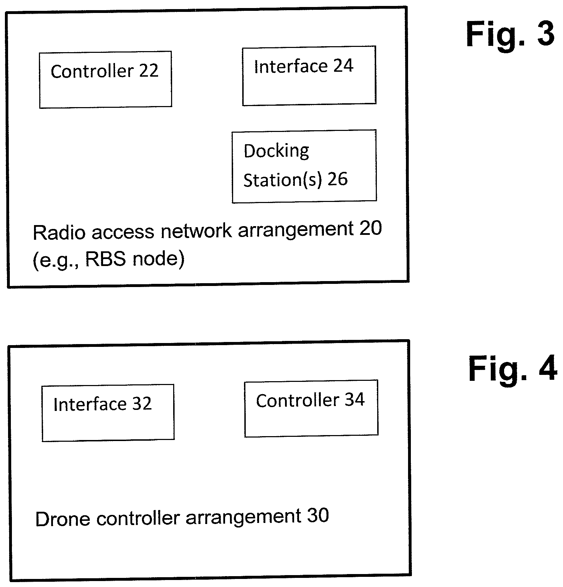

Fig. 3 illustrates an embodiment of an RAN arrangement 20. The RAN arrangement 20 may take the form of one or more of the access nodes 130 illustrated in Fig. 1. As an example, the RAN arrangement 20 may be constituted by an RBS node 130.

As shown in Fig. 3, the RAN arrangement 20 comprises a controller 22, an interface 24 and one or more docketing stations 26 for drones 10.

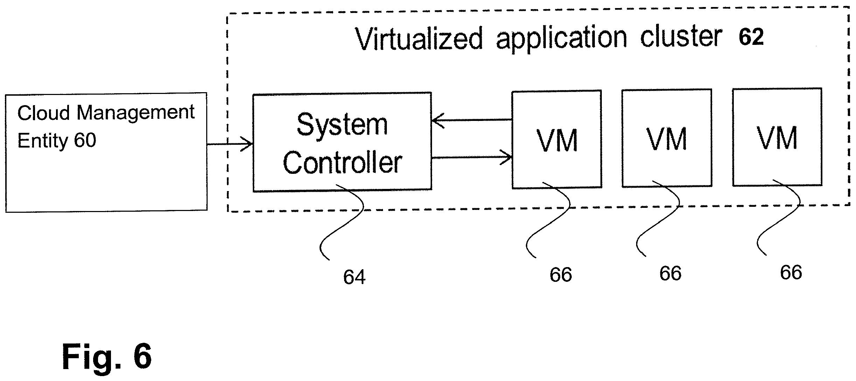

The controller 22 is configured to trigger registration of the cloud computing resources carried by the drone 10 at the cloud management entity associated with the RAN 140. While the RAN 140 belongs to the infrastructure layer 120 in Fig. 1, the cloud management entity belongs to the functional layer 110. Further details regarding the cloud management entity will be described below with reference to Fig. 6.

The interface 24 of the RAN arrangement 20 is configured to receive the registered cloud computing resources of the drone 10. As such, the interface 24 will have a similar configuration as the interface 18 of the drone 10.

The one or more docking station 26 may be located in a cell tower of the RAN 140 (e.g., in the vicinity of an antenna). Each docking station may comprise an interface, such as a socket, that permits a drone 10 to recharge its batteries. As such, a fully autonomous drone system can be implemented. Further, each docking station 26 may comprise an interface for establishing a wirebound communication connection to a drone 10. The corresponding communication connection can be used for at least one of the registration of cloud computing resources at the cloud management entity and the provision of the registred cloud computing resources to the RAN 140.

Fig. 4 illustrates an embodiment of a drone controller arrangement 30. The drone controller arrangement 30 is configured to control a plurality of the drones 10 to dynamically extend RAN capacities. The drone controller arrangement 30 will typically not belong to the telecommunication cloud architecture as such and is therefore not shown in Fig. 1.

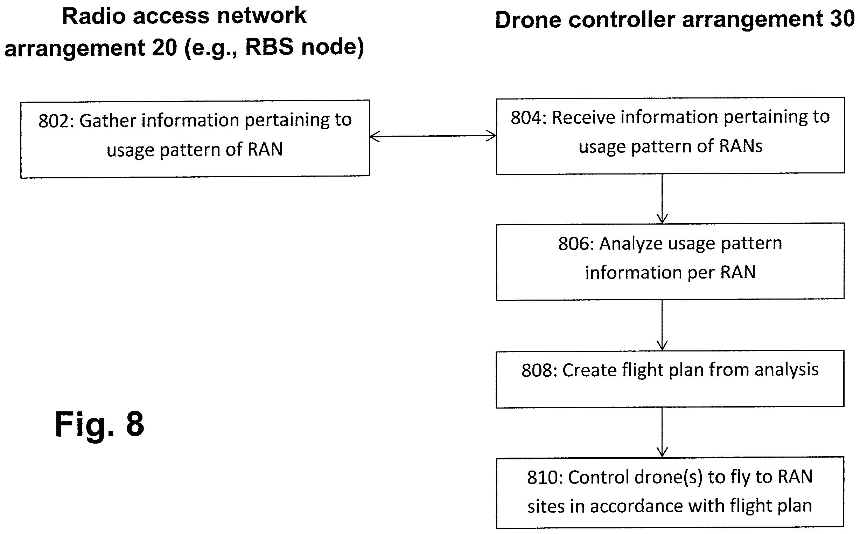

With reference to Fig. 4, the drone controller arrangement 30 comprises an interface 32 and a controller 34. The interface 32 is configured to receive information pertaining to usage patterns of multiple RANs (such as the RAN 140 in Fig. 1). The usage pattern information may have been gathered locally in the RANs. The controller 34 is configured to analyze the usage pattern of each RAN and to control the drones 10 to extend the RAN capacities in accordance with the analysis. Various details in this regard will be described below with reference to Figs. 8 to 12.

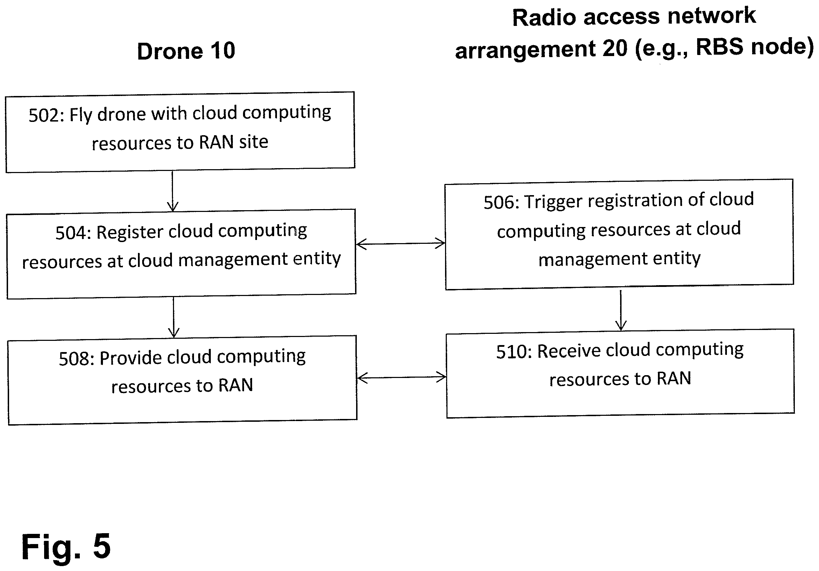

In the following, the operations of the drone 10 and the RAN arrangement 20 in connection with extending RAN capacities will be described with reference to the flow diagrams of Fig. 5. The steps shown on the left-hand side of Fig. 5 are performed by the drone 10, while the steps on the right-hand side are performed by the RAN arrangement 20.

In step 502, the drone 10 with its payload 14 (i.e., its cloud computing resources) flies to the site of the RAN 140. Then, in step 504, the controller 16 of the drone 10 registers the cloud computing resources at the particular could management entity associated with the RAN 140. To this end a communication connection may be established between the drone 10 and the cloud management entity on the functional layer 110 of the cloud architecture 100. In certain variants, this communication connection may be established directly between the drone 10 and the cloud management entity. In the embodiment shown in Fig. 5, it will be assumed that the communication connection stretches from the drone 10 via the RAN arrangement 20 to the cloud management entity. As such, the controller 16 of the drone 10 informs, still in step 504, the RAN arrangement 20 that its cloud computing resources are to be registered at the cloud management entity. In response, the controller 22 of the RAN arrangement 20, in step 506, triggers a corresponding registration at the cloud management entity.

Once registration of the cloud computing resources at the cloud management entity has been confirmed to the drone 10 (either by the cloud management entity directly or via the RAN arrangement 20), the drone 10 provides its cloud computing resources to the RAN 140 via its interface 18 in step 508. In step 510, the RAN 140 receives the corresponding cloud computing resources via its interface 24.

In the following, the registration of the cloud computing resources of the drone 10 at the cloud management entity will be described in more detail with reference to Fig. 6.

Fig. 6 shows embodiments of the cloud management entity 60 and of a virtualized application cluster 62 on the functional layer 110 of the cloud architecture 100 of Fig. 1. As illustrated in Fig. 6, the virtualized application cluster 62 comprises a system controller 64 and multiple VMs 66.

When registration of cloud computing resources of the drone 10 at the cloud management entity 60 is triggered (see, e.g., step 506 in Fig. 5), the cloud management entity 60 informs the system controller 64 of the virtualized application cluster 62 that the cloud computing resources of the drone 10 are to be included in the virtualized application cluster 62 to extend the same. The virtualized application cluster 62 is, for example, configured to implement an RBS service (or any other service) for the RAN 140.

The system controller 64 then includes the cloud computing resources carried by the drone 10 as a further VM 66 in the virtualized application cluster 62. Alternatively, the system controller 64 may allocate the cloud computing resources of the drone 10 to an existing VM 66. The cloud management and orchestration operations performed by the cloud management entity 60 in connection with the extension of RAN capacities may conform to ETSI GS NFV-MAN 001,V 1.1.1 (2014-12). As an example, the VNF expansion procedure described in section B.4.4.1 or other expansion procedures may be implemented.

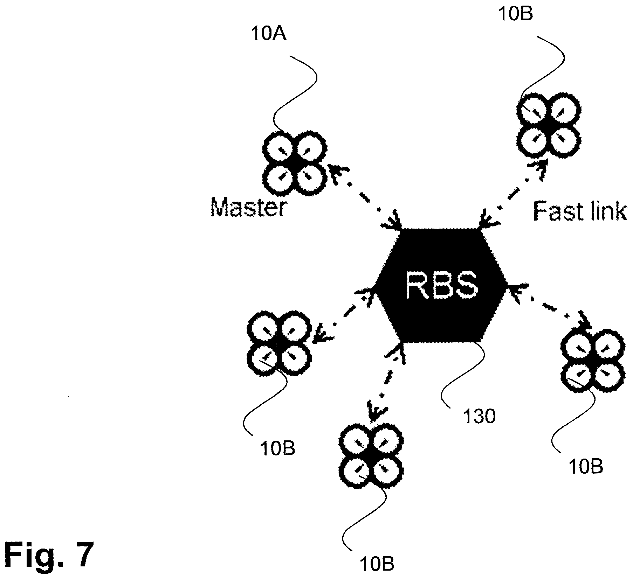

In the preceding discussions it was assumed that the RAN capacities of a given RAN, such as RAN 140 in Fig. 1, are extended by a single drone 10. In practice, depending on the computing resources required by the RAN 140, a flock (or swarm) of drones will fly to each RAN site. The flock size will generally be dependent on the particular cloud computing resource requirement of the RAN 140. As such, multiple drones 10 may extend the capacities of an RBS node 130 within the RAN 140 as generally illustrated in Fig. 7.

In the scenario shown in Fig. 7, the flock of drones comprises a flock master 10A configured to steer to the RAN site and multiple flock slaves 10B configured to autonomously follow the flock master 10A. Each individual drone 10A, 10B will generally be configured as illustrated in Fig. 2.

Once the drones 10A, 10B have reached the site of the RAN 140, they will establish a fast communication connection ("fast link") to the RBS node 130 or any other node in the RAN 140. That communication connection will stretch over one or more of the hardware layer, the infrastructure layer, the platform layer, and the application layer as explained above. As an example, the communication connection may be established on the infrastructure layer (and the layer below) when the cloud computing resources comprise at least one IaaS (e.g., to create a new VM 66 or extend an existing VM 66 as illustrated in Fig. 6). In another scenario, the communication connection is established on the application layer (and the layers below) when the cloud computing resources provide at least one SaaS. In the particular embodiment illustrated in Fig. 7, the SaaS comprises an RBS service or function.

The deployment of an individual drone 10 or an individual flock of drones 10 may be performed in various ways. As an example, the cloud computing resources carried by the one or more drones 10 may be provided responsive to a capacity expansion request initiated in the RAN 140. That request may, for example, be communicated by the RAN 140 (e.g., the RBS node 130) to the drone controller arrangement 30 which, in turn, directs one or more of the drones 10 to the site of the RAN 140 responsive to the capacity expansion request. In certain variants, the capacity expansion request may also be communicated directly from the RAN 140 to a drone 10 (e.g., to a drone master 10A).

In other variants, the cloud computing resources of the one or more drones 10 may be provided to the RAN 140 responsive to an analysis of a usage pattern of the RAN 140. That analysis may be made centrally for a plurality of RANs by the drone controller arrangement 30 (e.g., realized in the form of a dedicated network node or network function).

Fig. 8 illustrates flow diagrams of a usage pattern analysis embodiment performed in cooperation between the RAN arrangement 20 (e.g., the RAN 140 or the RBS node 130) and the drone controller arrangement 30. The method steps on the left-hand side of the Fig. 8 are performed by the RAN arrangement 20, whereas the method steps on the right-hand side are performed by the drone controller arrangement 30.

In step 802, the RAN arrangement 20 gathers information pertaining to a usage pattern of the RAN 140. The usage pattern information gathered in step 802 may, for example, pertain to cell characteristics of a cell associated with the RAN 140. Such cell characteristics may generally take the form of KPIs. The usage pattern information gathered in step 802 may be indicative of a temporal variation of the KPIs.

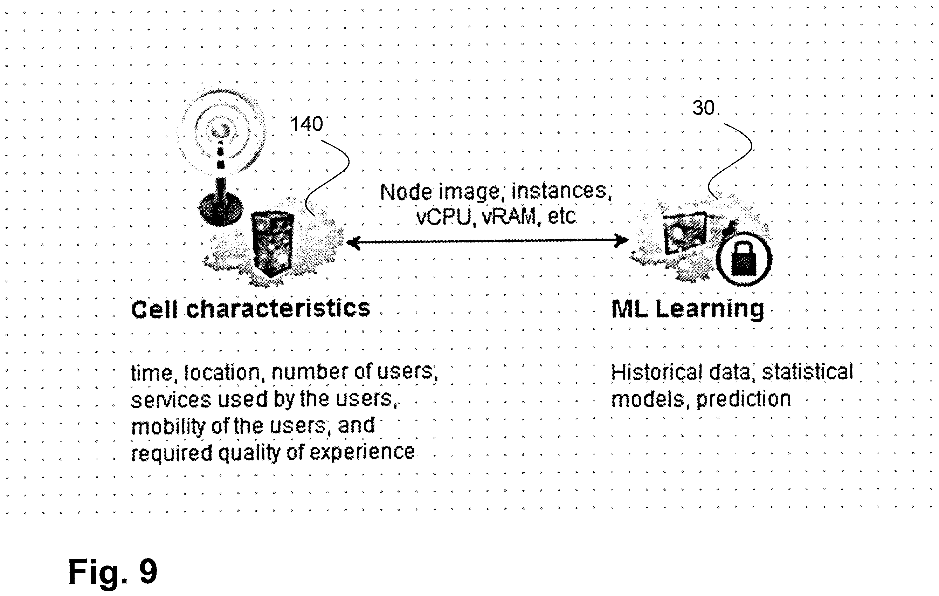

As shown in Fig. 9, the cell characteristics gathered in step 802 may, for example, be indicative of a number of user terminals served by the RAN 140 or a cell thereof, the type of services used by the user terminals served by the RAN 140 or a cell thereof, mobility of the user terminals, and an actual or required quality of experience (e.g., as defined in SLAs). Such information may be enriched with temporal information as well as location information in relation to one or more of the cell, the cell characteristics and the user terminals served within the cell, and the RAN 140 as a whole.

A plurality of RAN arrangements 20 will transmit their gathered usage pattern information to the drone controller arrangement 30, as shown in Fig. 8. The corresponding information is received by the drone controller arrangement 30 in step 804.

In a further step 806, the usage pattern information received for a multiple RANs 140 is analysed per RAN 140 (e.g., per cell). This analysis may include the application of machine learning techniques by the drone controller arrangement 30, as generally shown in Fig. 9. The machine learning techniques may be based on one or more of historical usage pattern information, statistical usage models, and usage prediction.

Generally, the analysis step 806 may lead to the discovery of associations between cell characteristics on the one hand and RAN computing requirements at a certain time or time interval on the other. With the machine learning approach, or with other approaches such as the application of expert rules, a flight plan is generated in step 808 based on the analysed usage pattern information. The flight plan may map cloud computing resources (e.g., in terms of one or more of a flock size and the payload of an individual drone 10 in the flock) to an individual RAN site and an individual time period or point in time. As an example, the required cloud computing resources may be determined in terms of the required virtual resources (e.g., in terms of virtual CPU resources, virtual RAN resources, virtual disk resources, etc.).

Based on the flight plan generated in step 808, the drone controller arrangement 30 controls one or more drones 10 or one or more flocks of drones 10 to fly to RAN sites (see step 810 in Fig. 8). In this way, RAN capacities can dynamically be extended depending on the associated usage patterns.

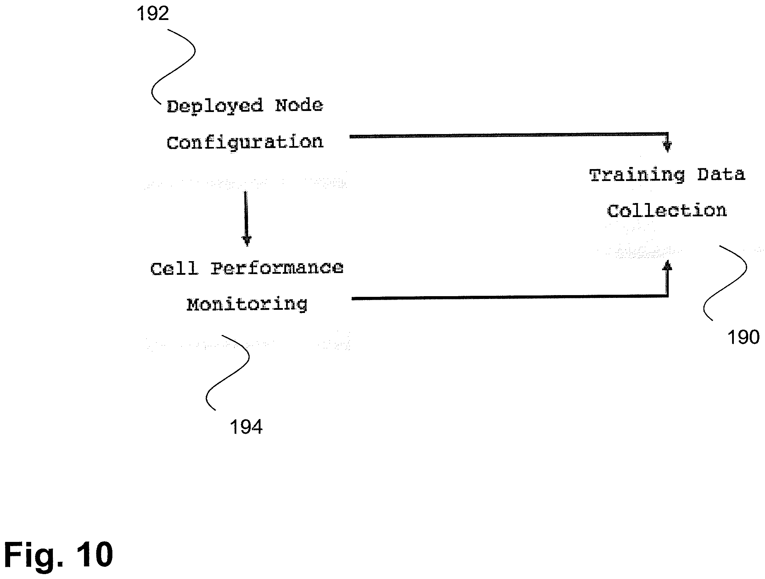

Fig. 10 illustrates the steps of an exemplary model training phase that may be applied in connection with the usage pattern analysis step 806 in Fig. 8. As illustrated in Fig. 10, during a training phase of the machine learning model, training data are collected in step 190. The training data are collected via the acquisition of deployed node or cell configuration information in step 192. Additionally, cell performance monitoring is performed in step 194 to collect further training data. Cell performance monitoring in step 194 may include the measurement of cell characteristics (e.g., in the form of KPIs) over time. It will be appreciated that when one or more drones 10 are attached to, for example, the RBS node 130 of Fig. 7, the configuration of that node 130 increases.

The training data is collected from cells of RANs that have already been deployed. From the collected node or cell configuration data (step 192) an inventory of deployed available resources may thus be built. In parallel, or thereafter, cell performance monitoring (step 194) provides cell performance information, including KPIs such as dropped calls, cell outages, round trip delay and, in particular, the requested amount of cloud computing resources required for the particular cell or the associated RAN 140. The cell performance information may be provided with time stamps or other temporal attributes for the usage pattern analysis. The collected training data is stored in a repository and used for machine learning.

It should be noted that the configuration data acquired in step 192 can optionally also be filtered (e.g., geographically and/or temporally). As an example, the filtering may be applied to identify only target geographical areas or target RAN sites of special importance (e.g., for commercial districts with many people during certain hours, sports arenas or other places of events, and so on).

Based on the repository with collected training data, a model is trained to select, for example, the most suitable RAN site to attach one or more drones 10 to provide additional cloud computing resources for a particular time or time interval. The model may form the basis for the flight plan created in step 808.

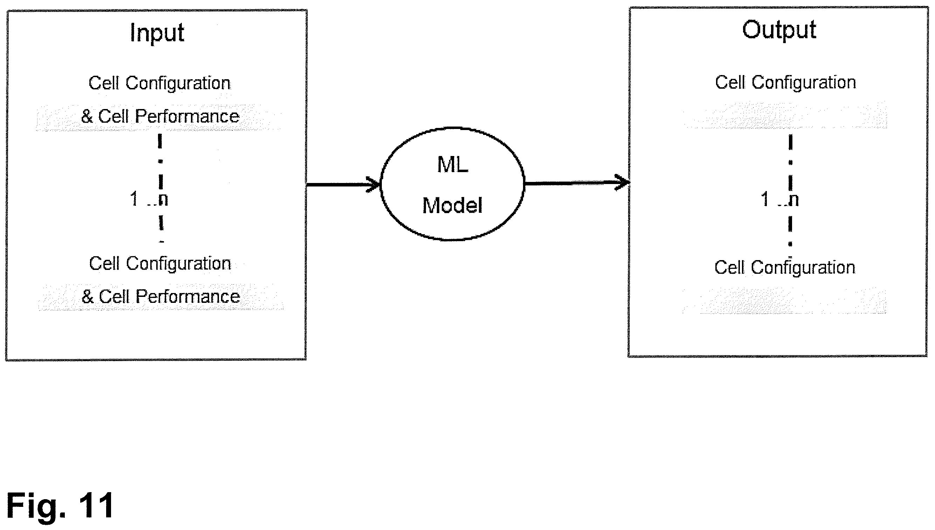

As has been explained with reference to Fig. 10, in the model training phase the cell performance of individual cells is paired with the associated cell configuration information for a plurality of cells, or RANs, 1 to n. This training phase to generate the machine learning model is illustrated on the left-hand side of Fig. 11 as "input". The output of the machine learning model will be a flight plan indicative of target cell configurations for the various cells, or RANs, 1 to n (as shown on the right-hand side of Fig. 11). The target cell configurations output by the machine learning model are indicative of the temporal allocation of a particular number of drones 10 and particular cloud computing resources carried by those drones 10 to an individual cell or RAN site.

As such, the cell configuration output illustrated in the right-hand side of Fig. 11 may generally contain the predicted amount of the required additional cloud computing resources for a particular time or time interval. For generating the flight plan in step 808 of Fig. 8, this predicted amount may then be mapped to a number of drones 10 to define the flock size allocated to a particular cell or time or time interval. In certain variations, the flock masters 10A may then be assigned to a flight plan together with a certain number of flock slaves 10B to fly to various RAN sites during a given period of time (e.g., a day). As explained above, the flock slaves 10B will autonomously follow the flock master 10A to the individual RAN sites.

Once the target RAN site is reached, the drone will connect to the RAN site and report their cloud computing resources to the cloud management entity 60. The cloud management entity 60 will then be able to scale out a VNF (e.g., by adding VNF Components, VNFC) or to scale up virtualized resources in existing VNF or VNFCs. More details regarding exemplary scale out and scale up procedures are described in ETSI GF MVF-MAN 001 V1.1.1 (2014-12).

Once connected to the RAN 140, a drone 10 (e.g., the drone master 10A) can receive instructions for the re-deployment of its cloud computing resources. Such instructions may overwrite a flight plan and allow for a forced re-deployment of the drone 10 or flock of drones 10 (e.g., to remain longer at the present RAN site or to steer to an RAN site different from the next RAN site in the flight plan). In case of a failure of the flock master 10A, a new flock mater 10A may be elected from the flock slaves 10B.

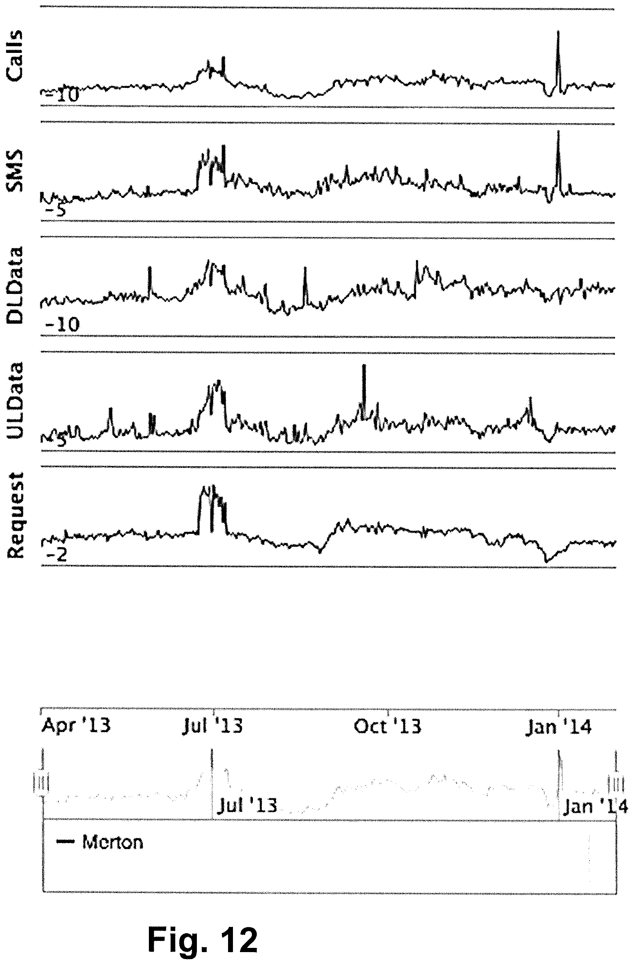

Fig. 12 illustrates exemplary usage pattern information that may be gathered in step 802 and analysed in step 806 of Fig. 8 for creating the model as explained with reference to Figs. 10 and 11.

Specifically, Fig. 12 shows the usage pattern of five different KPIs, namely calls, Short Message Service (SMS), download data in bytes, upload data in bytes and the number of data requests, for a particular RAN cell in Merton, a London borough. In addition or as an alternative to sending one or more of these KPIs to the drone controller arrangement 30, the usage pattern information may comprise the actually needed cloud computing resources at a respective RAN cell (e.g., in terms of required computation power) at a particular time or time interval.

A further benefit of the present disclosure is the possibility to cover capacity problems of RANs in connection with planned one-time or other events not predictable via machine learning techniques. Specifically, drones 10 may be controlled to selectively extend RAN capacities in such cases. As becomes apparent, for example, from Fig. 12, there is an unusually large amount of data requests in the area of Merton between 24 June and 7 July 2013. The reason behind this unusual peak of request is the Wimbledon Championship in Tennis. Thus, this peak is a good example of when network operators may employ the RAN scaling approach presented herein to reduce OPEX costs for a network operator.

The present disclosure is also applicable in connection with unplanned events such as accidents, traffic jams or demonstrations. In such scenarios, the drone controller arrangement 30 may specifically steer the appropriate number of drones 10 to the appropriate RAN site to dynamically extend the RAN capacities as needed (e.g., responsive to a capacity expansion request from a RAN 140 effected by the unplanned event).

As has become apparent from the above description of exemplary embodiments, the present disclosure permits a just-in-time cloud deployment and configuration for RANs. Specifically, an automated cloud scalability can be provided based on time and network usage patterns (e.g., based on cell configuration prediction). Hardware over-dimensioning at cloud edges (e.g., at RAN sites) can thus be decreased. Additionally, RAN capabilities can dynamically be extended to meet both planned and unplanned RAN capacity requirements. The present disclosure can be implemented as an autonomous system (e.g., independently from a conventional telecommunications cloud architecture).

The present disclosure may, of course, be carried out in other ways than those specifically set forth herein without departing from the scope of the claims appended hereto. Thus, the present embodiments are to be considered in all respects as illustrative and not restrictive, and all changes coming within the scope the appended claims are intended to be embraced therein.

## Claims

1. A method of extending capacities of a radio access network (140), the method being carried out by a drone (10) and the method comprising flying (502) the drone (10) to a docking station (26) of a radio access network arrangement (20) of the radio access network, wherein the drone is carrying cloud computing resources (14);
establishing a communication connection between the drone and the radio access network, wherein the communication connection is a wirebound link and configured for the provision of the cloud computing resources to the radio access network;
registering (504) the cloud computing resources of the drone at a cloud management entity (60) associated with the radio access network; and
providing (508) the registered cloud computing resources of the drone to the radio access network.

2. The method of claim 1, wherein
the drone provides the cloud computing resources responsive to a capacity expansion request, wherein the capacity expansion request is initiated in the radio access network or
the drone provides the cloud computing resources responsive to an analysis of a usage pattern of the radio access network, wherein the analysis is made centrally for a plurality of radio access networks.

3. The method of any of the preceding claims, further comprising
flying a flock of drones to the site of the radio access network and, optionally,
wherein a size of the flock is dependent on cloud computing resources required by the radio access network and/or
wherein the flock of drones comprises
a flock master (10A) configured to steer to the site of the radio access network; and
one or more flock slaves (10B) configured to autonomously follow the flock master.

4. The method of any of claims 1 to 3, wherein
the communication connection is established at least on an infrastructure layer within a Network Functions Visualization, NFV, ETSI standard, and wherein the cloud computing resources provided to the radio access network comprise at least one Infrastructure-as-a-Service, IaaS, or
wherein the communication connection is established at least on an application layer within a Network Functions Visualization, NFV, ETSI standard, and wherein the cloud computing resources provided to the radio access network comprise at least one Software-as-a-Service, SaaS and, optionally,
wherein the SaaS comprises a Radio Base Station, RBS, service or function.

5. A method of extending capacities of a radio access network (140), the method being carried out by a radio access network arrangement (20) of the radio access network (140) and the method comprising
establishing, by an interface (24) of a docking station (26) of the radio access network arrangement (20), a communication connection between the radio access network and a drone (10), wherein the communication connection is a wirebound link; triggering registration (506) of cloud computing resources (14) carried by the drone at a cloud management entity (60) associated with the radio access network; and
receiving (510), via the communication connection, the registered cloud computing resources of the drone.

6. The method of claim 5, further comprising
initiating a capacity extension request for the radio access network, wherein the cloud computing resources are received responsive to the capacity extension request and/or
the method further comprising
sending information pertaining to a usage pattern of the radio access network to a drone controller arrangement (30), wherein the cloud computing resources are received responsive to an analysis of the usage pattern.

7. A computer program product comprising program code portions for performing the steps of any of the preceding claims when the computer program product is executed by at least one computing device and, optionally,
wherein the computer program product is stored on a computer-readable recording medium.

8. A drone (10) configured to extend capacities of a radio access network (140), comprising
a flight equipment (12) configured to fly the drone to a docking station (26) of a radio access network arrangement (20) of the radio access network;
a payload (14) comprising cloud computing resources;
a controller (16) configured to register the cloud computing resources of the drone at a cloud management entity (60) associated with the radio access network; and
an interface (18) configured to provide the registered cloud computing resources of the drone to the radio access network,
wherein the interface (18) is configured to establish a wirebound communication connection with an interface (24) of the docking station of the radio access network arrangement, wherein the communication connection is configured for the provision of the cloud computing resources to the radio access network.

9. A radio access network arrangement (20) of a radio access network (140), comprising
a controller (22) configured to trigger registration of cloud computing resources (14) carried by a drone (10) at a cloud management entity (60) associated with the radio access network; and
a docking station (26) comprising an interface (24) configured to establish a wirebound communication connection between the radio access network arrangement (20) and the drone and to receive, via the communication connection, the registered cloud computing resources of the drone.

10. The arrangement of claim 9, wherein
the arrangement is a Radio Base Station, RBS, node (130) or comprises an RBS service or function and/or
wherein the docking station (26) is configured to perform recharging of the drone.

11. A telecommunications cloud system (100) comprising at least one of
the drone of claim 8 and the radio access network arrangement of any of claims 9 to 10;
a cloud management entity (60);
a data center (160); and
an Evolved Packet Core, EPC (150), or EPC service or function.

## Patentansprüche

1. Verfahren zur Erweiterung der Kapazitäten eines Funkzugangsnetzes (140), wobei das Verfahren von einer Drohne (10) durchgeführt wird und das Verfahren Folgendes umfasst:
Fliegen (502) der Drohne (10) zu einer Dockingstation (26) einer Funkzugangsnetzanordnung (20) des Funkzugangsnetzes, wobei die Drohne Cloud-Computing-Ressourcen (14) trägt;
Einrichten einer Kommunikationsverbindung zwischen der Drohne und dem Funkzugangsnetz, wobei die Kommunikationsverbindung eine drahtgebundene Verbindung ist und für die Bereitstellung der Cloud-Computing-Ressourcen für das Funkzugangsnetz konfiguriert ist;
Registrieren (504) der Cloud-Computing-Ressourcen der Drohne bei einer Cloud-Management-Einheit (60), die dem Funkzugangsnetz zugeordnet ist; und
Bereitstellen (508) der registrierten Cloud-Computing-Ressourcen der Drohne für das Funkzugangsnetz.

2. Verfahren nach Anspruch 1, wobei
die Drohne die Cloud-Computing-Ressourcen bereitstellt, die auf eine Kapazitätserweiterungsanforderung reagieren, wobei die Kapazitätserweiterungsanforderung in dem Funkzugangsnetz initiiert wird oder die Drohne die Cloud-Computing-Ressourcen bereitstellt, die auf eine Analyse eines Nutzungsmusters des Funkzugangsnetzes reagieren, wobei die Analyse zentral für eine Vielzahl von Funkzugangsnetzen durchgeführt wird.

3. Verfahren nach einem der vorhergehenden Ansprüche, ferner umfassend
Fliegen eines Drohnenschwarms zum Standort des Funkzugangsnetzes und optional,
wobei eine Größe des Schwarms von Cloud-Computing-Ressourcen abhängt, die vom Funkzugangsnetz benötigt werden und/oder wobei der Drohnenschwarm umfasst
einen Schwarm-Master (10A), der so konfiguriert ist, dass er zum Standort des Funkzugangsnetzes steuert; und
einen oder mehrere Schwarm-Slaves (10B), die so konfiguriert sind, dass sie dem Schwarm-Master autonom zu folgen.

4. Verfahren nach einem der Ansprüche 1 bis 3, wobei
die Kommunikationsverbindung mindestens auf einer Infrastrukturschicht innerhalb eines ETSI-Standards der Netzfunktionsvisualisierung, NFV, eingerichtet ist, und wobei die dem Funkzugangsnetz bereitgestellten Cloud-Computing-Ressourcen mindestens eine Infrastructure-as-a-Service, IaaS, umfassen oder wobei die Kommunikationsverbindung mindestens auf einer Anwendungsschicht innerhalb eines ETSI-Standards der Netzwerkfunktionsvisualisierung, NFV, eingerichtet ist, und wobei die dem Funkzugangsnetz bereitgestellten Cloud-Computing-Ressourcen mindestens eine Software-as-a-Service, SaaS, umfassen und optional,
wobei die SaaS eine Funkbasisstation, RBS, einen Dienst oder eine Funktion umfasst.

5. Verfahren zur Erweiterung der Kapazitäten eines Funkzugangsnetzes (140), wobei das Verfahren durch eine Funkzugangsnetzanordnung (20) des Funkzugangsnetzes (140) durchgeführt wird, das Verfahren umfassend
Einrichten einer Kommunikationsverbindung zwischen dem Funkzugangsnetz und einer Drohne (10) durch eine Schnittstelle (24) einer Dockingstation (26) der Funkzugangsnetzanordnung (20),
wobei die Kommunikationsverbindung eine drahtgebundene Verbindung ist;
Auslösen der Registrierung (506) von Cloud-Computing-Ressourcen (14), die von der Drohne getragen werden, an einer Cloud-Management-Einheit (60), die dem Funkzugangsnetz zugeordnet ist; und
Empfangen (510) der registrierten Cloud-Computing-Ressourcen der Drohne über die Kommunikationsverbindung.

6. Verfahren nach Anspruch 5, ferner umfassend Initiieren einer Kapazitätserweiterungsanforderung für das Funkzugangsnetz, wobei die Cloud-Computing-Ressourcen als Reaktion auf die Kapazitätserweiterungsanforderung empfangen werden und/oder
wobei das Verfahren ferner Folgendes umfasst
Senden von Informationen, die sich auf ein Nutzungsmuster des Funkzugangsnetzes beziehen, an eine Drohnensteuerungsanordnung (30), wobei die Cloud-Computing-Ressourcen als Reaktion auf eine Analyse des Nutzungsmusters empfangen werden.

7. Computerprogrammprodukt umfassend Programmcodeanteile zur Ausführung der Schritte aus jedem der vorstehenden Ansprüche, wenn das Computerprogrammprodukt von mindestens einer Rechenvorrichtung ausgeführt wird, und optional,
wobei das Computerprogrammprodukt auf einem computerlesbaren Aufzeichnungsmedium gespeichert wird.

8. Drohne (10), die so konfiguriert ist, dass sie die Kapazitäten eines Funkzugangsnetzes (140) erweitert, umfassend eine Flugausrüstung (12), die so konfiguriert ist, dass sie die Drohne zu einer Dockingstation (26) einer Funkzugangsnetzanordnung (20) des Funkzugangsnetzes fliegt;
eine Nutzlast (14), die Cloud-Computing-Ressourcen umfasst; eine Steuerung (16), die so konfiguriert ist, dass sie die Cloud-Computing-Ressourcen der Drohne an einer Cloud-Management-Einheit (60), die dem Funkzugriffsnetzwerk zugeordnet ist, registriert; und
eine Schnittstelle (18), die so konfiguriert ist, dass sie die registrierten Cloud-Computing-Ressourcen der Drohne für das Funkzugangsnetz bereitstellt,
wobei die Schnittstelle (18) so konfiguriert ist, dass sie eine drahtgebundene Kommunikationsverbindung mit einer Schnittstelle (24) der Dockingstation der Funkzugangsnetzanordnung herstellt, wobei die Kommunikationsverbindung so konfiguriert ist, dass sie dem Funkzugangsnetz die Cloud-Computing-Ressourcen bereitstellt.

9. Funkzugangsnetzanordnung (20) eines Funkzugangsnetzes (140), umfassend
eine Steuerung (22), die so konfiguriert ist, dass sie die Registrierung von Cloud-Computing-Ressourcen (14), die von einer Drohne (10) getragen werden, an einer Cloud-Management-Einheit (60) auslöst, die dem Funkzugangsnetz zugeordnet ist; und
eine Dockingstation (26) umfassend eine Schnittstelle (24), die so konfiguriert ist, dass sie eine drahtgebundene Kommunikationsverbindung zwischen der Funkzugangsnetzanordnung (20) und der Drohne herstellt und über die Kommunikationsverbindung die registrierten Cloud-Computing-Ressourcen der Drohne empfängt.

10. Anordnung nach Anspruch 9, wobei
die Anordnung ein Knoten einer Funkbasisstation, RBS, (130) ist oder einen RBS-Dienst oder eine -Funktion umfasst und/oder wobei die Dockingstation (26) so konfiguriert ist, dass sie das Wiederaufladen der Drohne durchführt.

11. Telekommunikations-Cloud-System (100), umfassend mindestens eines der Drohne nach Anspruch 8 und der Funkzugangsnetzanordnung nach einem der Ansprüche 9 bis 10;
eine Cloud-Management-Einheit (60);
ein Datenzentrum (160); und
einen Evolved Packet Core, EPC (150), oder einen EPC-Dienst oder eine -Funktion.

## Revendications

1. Procédé d'extension de capacités d'un réseau d'accès radio (140), le procédé étant effectué par un drone (10) et le procédé comprenant
le fait de faire voler (502) le drone (10) vers une station d'accueil (26) d'un agencement de réseau d'accès radio (20) du réseau d'accès radio, dans lequel le drone transporte des ressources d'informatique en nuage (14) ;
l'établissement d'une connexion de communication entre le drone et le réseau d'accès radio, dans lequel la connexion de communication est une liaison filaire et configurée pour la fourniture des ressources d'informatique en nuage au réseau d'accès radio ;
l'enregistrement (504) des ressources d'informatique en nuage du drone au niveau d'une entité de gestion en nuage (60) associée au réseau d'accès radio ; et
la fourniture (508) des ressources d'informatique en nuage enregistrées du drone au réseau d'accès radio.

2. Procédé selon la revendication 1, dans lequel le drone fournit les ressources d'informatique en nuage en réponse à une demande d'extension de capacité, dans lequel la demande d'extension de capacité est initiée dans le réseau d'accès radio ou le drone fournit les ressources d'informatique en nuage en réponse à une analyse d'un schéma d'utilisation du réseau d'accès radio, dans lequel l'analyse est réalisée de manière centrale pour une pluralité de réseaux d'accès radio.

3. Procédé selon l'une quelconque des revendications précédentes, comprenant en outre
le fait de faire voler une flotte de drones vers le site du réseau d'accès radio et, facultativement,
dans lequel une taille de la flotte dépend de ressources d'informatique en nuage requises par le réseau d'accès radio et/ou
dans lequel la flotte de drones comprend
un maître de flotte (10A) configuré pour conduire vers le site du réseau d'accès radio ; et
un ou plusieurs esclaves de flotte (10B) configurés pour suivre de manière autonome le maître de flotte.

4. Procédé selon l'une quelconque des revendications 1 à 3, dans lequel
la connexion de communication est établie au moins sur une couche infrastructure au sein d'une norme ETSI de visualisation de fonctions de réseau, NFV, et dans lequel les ressources d'informatique en nuage fournies au réseau d'accès radio comprennent au moins une infrastructure en tant que service, IaaS, ou
dans lequel la connexion de communication est établie au moins sur une couche application au sein d'une norme ETSI de visualisation de fonctions de réseau, NFV, et dans lequel les ressources d'informatique en nuage fournies au réseau d'accès radio comprennent au moins un logiciel en tant que service, SaaS et, facultativement,
dans lequel le SaaS comprend un service ou une fonction de station de base radio, RBS.

5. Procédé d'extension de capacités d'un réseau d'accès radio (140), le procédé étant effectué par un agencement de réseau d'accès radio (20) du réseau d'accès radio (140) et le procédé comprenant
l'établissement, par une interface (24) d'une station d'accueil (26) de l'agencement de réseau d'accès radio (20), d'une connexion de communication entre le réseau d'accès radio et un drone (10),
dans lequel la connexion de communication est une liaison filaire ;
le déclenchement d'un enregistrement (506) de ressources d'informatique en nuage (14) transportées par le drone au niveau d'une entité de gestion en nuage (60) associée au réseau d'accès radio ; et
la réception (510), via la connexion de communication, des ressources d'informatique en nuage enregistrées du drone.

6. Procédé selon la revendication 5, comprenant en outre le lancement d'une demande d'extension de capacité pour le réseau d'accès radio, dans lequel les ressources d'informatique en nuage sont reçues en réponse à la demande d'extension de capacité et/ou
le procédé comprenant en outre
l'envoi d'informations se rapportant à un schéma d'utilisation du réseau d'accès radio à un agencement de contrôleur de drone (30), dans lequel les ressources d'informatique en nuage sont reçues en réponse à une analyse du schéma d'utilisation.

7. Produit programme informatique comprenant des parties de code de programme pour mettre en oeuvre les étapes selon l'une quelconque des revendications précédentes lorsque le produit programme informatique est exécuté par au moins un dispositif informatique et, facultativement,
dans lequel le produit programme informatique est stocké sur un support d'enregistrement lisible par ordinateur.

8. Drone (10) configuré pour étendre les capacités d'un réseau d'accès radio (140), comprenant
un équipement de vol (12) configuré pour faire voler le drone vers une station d'accueil (26) d'un agencement de réseau d'accès radio (20) du réseau d'accès radio ;
des données utiles (14) comprenant des ressources d'informatique en nuage ;
un contrôleur (16) configuré pour enregistrer les ressources d'informatique en nuage du drone au niveau d'une entité de gestion en nuage (60) associée au réseau d'accès radio ; et
une interface (18) configurée pour fournir les ressources d'informatique en nuage enregistrées du drone au réseau d'accès radio,
dans lequel l'interface (18) est configurée pour établir une connexion de communication filaire avec une interface (24) de la station d'accueil de l'agencement de réseau d'accès radio, dans lequel la connexion de communication est configurée pour la fourniture des ressources d'informatique en nuage au réseau d'accès radio.

9. Agencement de réseau d'accès radio (20) d'un réseau d'accès radio (140), comprenant
un contrôleur (22) configuré pour déclencher un enregistrement de ressources d'informatique en nuage (14) transportées par un drone (10) au niveau d'une entité de gestion en nuage (60) associée au réseau d'accès radio ; et une station d'accueil (26) comprenant une interface (24) configurée pour établir une connexion de communication filaire entre l'agencement de réseau d'accès radio (20) et le drone et pour recevoir, via la connexion de communication, les ressources d'informatique en nuage enregistrées du drone.

10. Agencement selon la revendication 9, dans lequel l'agencement est un noeud de station de base radio (130) ou comprend un service ou une fonction RBS et/ou
dans lequel la station d'accueil (26) est configurée pour mettre en oeuvre une recharge du drone.

11. Système de nuage de télécommunications (100) comprenant au moins l'un parmi le drone selon la revendication 8 et l'agencement de réseau d'accès radio selon l'une quelconque des revendications 9 à 10 ;
une entité de gestion en nuage (60) ;
un centre de données (160) ; et
un coeur en mode paquet évolué, EPC (150), ou un service ou une fonction EPC.
